# EUROPEAN PATENT APPLICATION

(11) **EP 2 990 165 A2**
(43) Date of publication of application: **02.03.2016**
(21) Application number: 15181962.0
(22) Date of filing: 21.08.2015
(51) Int. Cl.: B25J 9/16

(54) **ROBOT FOR FITTING AN OBJECT IN ANOTHER**

(30) Priority: 25.08.2014 JP 2014170181; 25.08.2014 JP 2014170183
(71) Applicant: Seiko Epson Corporation, Shinjuku-ku, Tokyo 163-0811 (JP)
(72) Inventor: Motoyoshi, Masaki, Nagano, 392-8502 (JP); Shimodaira, Yasuhiro, Nagano, 392-8502 (JP); Yamamoto, Sota, Nagano, 392-8502 (JP); Takeuchi, Yudai, Nagano, 392-8502 (JP)
(74) Representative: Hoffmann Eitle

(57) **Abstract**

A robot (1) with a controller (40) that may fit or place an object (W) or a fitting member (W) in a receiving section (Q) of a fitting rack (100). The robot gripper (22) holds a fitting member (W) and approaches the receiving section (Q) until they contact each other, while the force sensor (P) detects the contact force (F). The robot controller (40) moves the fitting member (W) in all directions until it alligns to a fitting direction (D), while monitoring the contact force (F), and places the fitting member (W) in the receiving section (Q).

## Description

### BACKGROUND

### 1. Technical Field

The invention relates to a robot and a robot system.

### 2. Related Art

There is a known robot which inserts a columnar attachment component into a columnar assembling hole (refer to JP-A-7-227725).

There is another known robot which includes a display displaying an operational state (refer to JP-A-2007-196298).

However, in the robot disclosed in JP-A-7-227725, there is a disadvantage in that it is not able to cause a fitting member to fit to a receiving section unless the fitting member has a columnar shape.

In the robot disclosed in JP-A-2007-196298, there is a disadvantage in that although an overall operational state of the robot can be recognized, it is difficult to recognize each movable unit of the robot and an operational state of the movable unit in an associated manner.

### SUMMARY

The object of the invention is to provide a robot and a robot system which perform fitting of a fitting member having no curved surface.

Another object of the invention is to provide a robot and a robot system which can recognize a state of a movable unit.

A robot and a robot system according to an aspect of the invention are configured to include a controller that causes a fitting member including at least one fitting flat surface which is a flat surface parallel to a fitting direction to move in the fitting direction so as to fit to a receiving section. In this configuration, the fitting member may include at least one fitting flat surface which is the flat surface parallel to the fitting direction need not to include a curved surface. Thus, fitting of the fitting member having no curved surface may be performed.

The controller may perform a fitting operation in which the fitting member is moved so as to fit to the receiving section while maintaining a state where the fitting flat surface is in surface contact with a receiving flat surface which is a flat surface included in the receiving section and being parallel to the fitting direction. In this case, in a state where the receiving flat surface and the fitting flat surface are in surface contact with each other, the fitting member may be positioned with respect to the receiving section in a direction orthogonal to the fitting flat surface. Moreover, the fitting member may be reliably moved in the fitting direction by moving the fitting member in a state where the receiving flat surface and the fitting flat surface are in surface contact with each other, that is, in a state where the fitting flat surface is slidable with respect to the receiving flat surface. Thus, the fitting member having no curved surface may reliably fit to the receiving section.

Before performing the above described fitting operation, following surface contact operation may be performed. That is, in the robot, the controller may perform a surface contact operation in which the fitting flat surface is brought into surface contact with the receiving flat surface while maintaining a state where the fitting flat surface is in line contact with a receiving straight line which is a straight line constituting an end of the receiving flat surface in a direction opposite to the fitting direction. In this case, while maintaining the state where the receiving straight line and the fitting flat surface are in line contact with each other, the fitting flat surface intactly comes into surface contact with the receiving flat surface which includes the receiving straight line. Thus, the fitting flat surface may be prevented from erroneously coming into surface contact with surfaces other than the receiving flat surface. In other words, the fitting flat surface and the receiving flat surface may be in surface contact reliably with each other. Specifically, in a state where the fitting flat surface is in line contact with the receiving straight line, the fitting flat surface may be brought into surface contact with the receiving flat surface which includes the receiving straight line, by rotating the fitting member about the receiving straight line.

Before performing above described surface contact operation, the following line contact operation may be performed. In the robot, the controller may perform a line contact operation in which the fitting flat surface is brought into line contact with the receiving straight line while maintaining a state where a fitting straight line which is a straight line constituting an end of the fitting flat surface in a direction orthogonal to the fitting direction is in point contact with the receiving straight line. In this case, while maintaining the state where the fitting straight line is in point contact with a point on the receiving straight line, the fitting flat surface which includes the fitting straight line intactly comes into line contact with the receiving straight line. Thus, the fitting flat surface may be prevented from erroneously coming into line contact with ridgelines other than the receiving straight line. In other words, the fitting flat surface and the receiving straight line may be reliably in line contact with each other. Specifically, in a state where the fitting straight line is in point contact with the receiving straight line, the fitting flat surface which includes the fitting straight line may be brought into line contact with the receiving straight line by rotating the fitting member about a contact point.

When abnormality is detected, the controller may perform at least one of position controlling in which the fitting member is moved in a direction orthogonal to the fitting flat surface or the receiving flat surface, and force controlling in which a force in the direction orthogonal to the fitting flat surface or the receiving flat surface is applied to the fitting member. In this case, position controlling or force controlling of the fitting member may be performed so as to cancel the surface contact between the fitting flat surface and the receiving flat surface or the line contact between the fitting flat surface and the receiving straight line. Thus, abnormality occurring during a surface contact operation or a line contact operation may be cancelled. Here, abnormality indicates a state, for example, where a force or a moment which is equal to or greater than a threshold value applied to the fitting member, and may also be a state where the fitting member and the receiving section engage with each other. The state where the fitting member and the receiving section engage with each other denotes that the fitting member is caught in the receiving section in a state where at least one of the fitting member and the receiving section is elastically deformed or plastically deformed.

When abnormality is detected, the controller may perform at least one of position controlling in which the fitting member rotates about the receiving straight line, and force controlling in which a moment about the receiving straight line is applied to the fitting member. In this case, during the surface contact operation, the fitting flat surface may be brought into surface contact with the receiving flat surface which includes the receiving straight line by rotating the fitting member about the receiving straight line. However, abnormality may occur during the aforementioned process. The abnormality which occurs during the surface contact operation in such a manner may be cancelled by performing position controlling or force controlling similar to that performed in the surface contact operation.

When abnormality is detected, the controller may perform at least one of position controlling in which the fitting member is moved in a direction orthogonal to the receiving straight line and parallel to the fitting flat surface or the receiving flat surface, and force controlling in which a force in the direction orthogonal to the receiving straight line and parallel to the fitting flat surface or the receiving flat surface is applied to the fitting member. In this case, in a state where the fitting member is not in contact with the receiving section, the fitting straight line may be brought into point contact with the receiving straight line by moving the fitting member in a direction orthogonal to the receiving straight line and parallel to the fitting flat surface or the receiving flat surface. However, abnormality may occur during the aforementioned process. The abnormality which occurs while the fitting straight line is brought into point contact with the receiving straight line may be cancelled by performing position controlling or force controlling in a direction parallel to that in the process.

The robot may further include a grip section that grips the fitting member, and an elastic member that is interposed between the fitting member and the grip section at a contact spot of the fitting member and the grip section. In this case, in a state where the fitting member is in contact with the receiving section, even though a force or a moment which changes the posture of the fitting member is applied thereto, the force or the moment may be absorbed through elastic deformation of the elastic member. In other words, the fitting member is prevented from changing in posture which may not be followed by performing force controlling of the robot. Thus, work may be performed more accurately.

A robot and a robot system according to another aspect of the invention include a movable unit, a display unit that is included in the movable unit, and a display control unit that controls a display state of the display unit in accordance with a control state of the movable unit. In this case, since the display unit is included in the movable unit, the movable unit and a state of the movable unit may be easily recognized in an associated manner.

The display control unit may control the display state of the display unit in accordance with a state of position controlling of the movable unit. In this case, a position or a posture of the movable unit at the present time or in the future may be easily recognized. For example, a worker may carry oneself so as not to interfere with the movable unit while being in preparation for a change in the position or the posture of the movable unit.

The display control unit may control the display state of the display unit in accordance with a state of force controlling of the movable unit. In this case, a state of a force which is applied to the movable unit at the present time or in the future may be recognized. For example, it is possible to recognize whether or not a force or a moment is applied between the movable unit and a work-piece. Therefore, when abnormality or the like occurs, it is possible to recognize whether or not the work-piece is in a state of being able to be damaged by the movable unit, or it is possible to recognize safety and the like of a worker while handling the work-piece. In a state where force controlling is performed, there is a case where there is no change in the position or the posture of the movable unit. In this case, even though there is a possibility of erroneous recognition as if no control is performed with respect to the movable unit when worker watches the movable unit at a standstill. However, a worker may easily recognize that force controlling is in effect, based on the display state of the display unit.

The movable unit may be an end effector which is mounted in a tip end of an arm, and the display unit may include a plurality of emission sections. In this case, the emission sections may be arranged at positions so as to be rotationally symmetrical about an axis of the arm in the length direction. Thus, visual recognition properties of the display unit may be ensured even in the end effector of which the visually recognized direction is changed. Moreover, since changes in posture caused by force controlling are recognized in points, an aligned state of the rotational direction of a tool in particular may be easily recognized compared to continuous displays in ring shapes.

The display control unit may change brightness of the display unit in accordance with the control state of the movable unit. In this case, the control state of the movable unit may be recognized based on the brightness of the display unit. In addition, the display control unit may change the duration of at least one of an emission time period and a non-emission time period of the display unit in accordance with the control state of the movable unit. Thus, the control state of the movable unit can be recognized based on the duration of at least one of the emission time period and the non-emission time period.

### BRIEF DESCRIPTION OF THE DRAWINGS

The invention will be described with reference to the accompanying drawings, wherein like numbers reference like elements.
Fig. 1A is a perspective view of a robot according to a first embodiment, Fig. 1B is a block diagram of a controller, and Fig. 1C is a block diagram of a function of the robot.
Fig. 2A is a perspective view of an end effector, Fig. 2B is a table showing contents of control for each operation, and Fig. 2C is an explanatory diagram of a standard direction in fitting processing.
Figs. 3A to 3E are explanatory diagrams of operations of a fitting member, and Figs. 3F to 3H are diagrams illustrating the fitting member in an alternative embodiment.
Fig. 4A is a perspective view of a robot according to a second embodiment, Fig. 4B is a block diagram of a controller, and Fig. 4C is a block diagram of a function of the robot.
Fig. 5A is a perspective view of an end effector, Fig. 5B is a table showing contents of control for each operation, and Fig. 5C is an explanatory diagram of the standard direction in fitting processing.
Figs. 6A to 6E are explanatory diagrams of operations of a fitting member.

### DESCRIPTION OF EXEMPLARY EMBODIMENTS

### First Embodiment

Hereinafter, descriptions will be given regarding a first embodiment of the invention in the following order with reference to the accompanying drawings. The same numerals and signs are applied to the corresponding constitution elements in each diagram, and thus, overlapping descriptions will not be repeated.
- 1.: Constitution of Robot according to First Embodiment
- 2.: Constitution of Controller
- 3.: Constitution of End Effector
- 4.: Fitting Processing
- 4-1.: Point-contact Operation
- 4-2.: Line-contact Operation
- 4-3.: Surface-contact Operation
- 4-4.: Fitting Operation
- 4-5.: Abnormality Recovery Operation
- 5.: Alternative Embodiment

### 1. Constitution of Robot

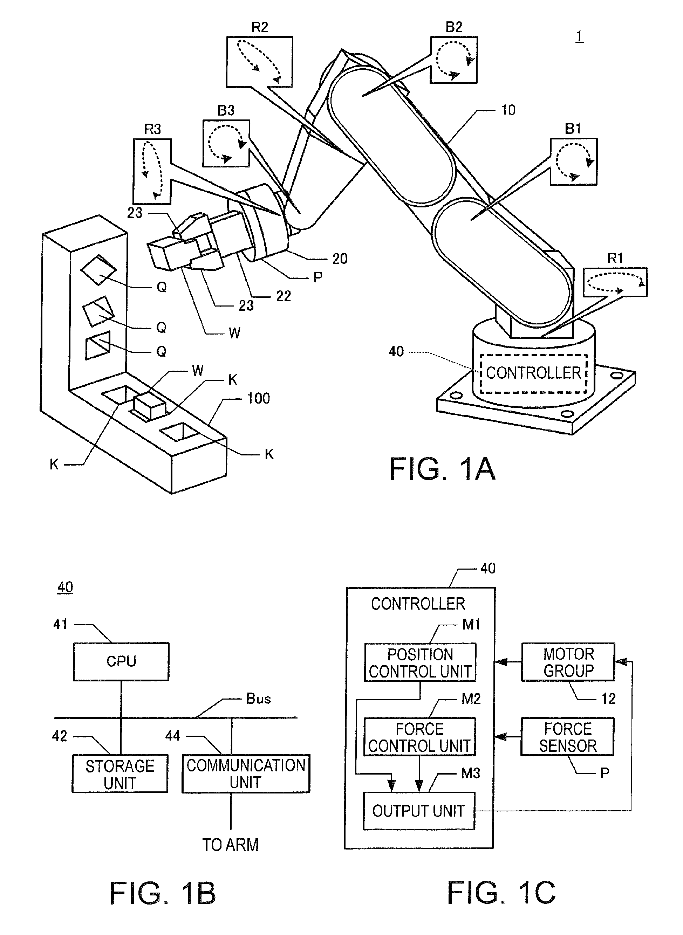

Fig. 1A is a perspective view of a robot 1 according to the first embodiment of the invention. As illustrated in Fig. 1A, the robot 1 includes an arm 10, an end effector 20, and a controller 40. The arm 10 is a six axes arm having three bending joints B1 to B3 and three torsional joints R1 to R3. The bending joints B1 to B3 are joints which allow members constituting the arm 10 to mutually rotate centering around an axis of the arm 10 orthogonal to the length direction thereof. The torsional joints R1 to R3 are joints which allow members constituting the arm 10 to mutually rotate centering around the axis of the arm 10 in the length direction. The arm 10 includes a motor group (not illustrated in Fig. 1A) as a drive unit for operating the bending joints B1 to B3 and the torsional joints R1 to R3.

The end effector 20 is mounted in a tip end of the arm 10. As the six axes arm 10 is driven, the end effector 20 can be in an arbitrary posture (angle) at an arbitrary position within a predetermined movable range. The end effector 20 is provided with a force sensor P. The force sensor P is a sensor which measures three axes forces applied to the end effector 20, and moments applied about the three axes.

The robot 1 is a general-purpose robot which can perform various types of work by conducting teaching. In the embodiment, teaching for causing a fitting member W to fit to a receiving section Q is conducted with respect to the controller 40. The fitting member W is inserted into a holding section K of a fitting rack 100, and the robot 1 grips the fitting member W which is inserted into the holding section K. Then, the robot 1 causes the fitting member W to fit to the receiving section Q of the fitting rack 100.

### 2. Constitution of Controller

The controller 40 is a computer for controlling the robot 1. As described in the embodiment, the controller 40 may be included inside the robot 1. In addition, the controller 40 may be included outside the robot 1 so as to be able to communicate with the robot 1, thereby constituting a robot system which includes the controller 40 and the robot 1. Naturally, the controller 40 may be realized by the computer inside the robot 1 and the computer outside the robot 1 in cooperation with each other.

Fig. 1B is a block diagram of hardware of the controller 40. For example, the controller 40 includes a central processing unit (CPU) 41, a storage unit 42, and a communication unit 44. The controller 40 communicates with the arm 10 via the communication unit 44. The constitution elements are connected to one another via a bus Bus and an input/output mechanism (not illustrated) so as to be able to communicate with one another. The CPU 41 executes various programs stored in the storage unit 42. For example, the storage unit 42 includes a hard disk drive (HDD), a solid state drive (SSD), an electrically erasable programmable read-only memory (EEPROM), a read-only memory (ROM), a random access memory (RAM), and the like. The storage unit 42 stores various types of information, images, and programs processed by the controller 40. The storage unit 42 may be an outer mounted-type storage device which is connected through a digital input/output port for a USB and the like, in place of the storage unit built in the controller 40. For example, the communication unit 44 is constituted by including the digital input/output port for a USB and the like, or an ethernet port.

Fig. 1C is a block diagram of a function of the robot. The controller 40 controls the arm 10 so as to cause the fitting member W to fit to the receiving section Q. Therefore, the controller 40 includes a position control unit M1, a force control unit M2, and an output unit M3. For example, a part or all of the functional sections are realized by the CPU 41 executing various programs which are stored in the storage unit 42. In addition, a part or all of the functional sections may be functional sections of hardware such as large scale integration (LSI) or an application specific integrated circuit (ASIC) .

In the embodiment, the controller 40 outputs a control signal to a motor group 12 which is constituted of motors respectively corresponding to the joints B1 to B3 and the torsional joints R1 to R3 of the arm 10. The position control unit M1 sets an objective position and an objective posture of the end effector 20 and acquires control amounts of the motor group 12 in order to realize the objective position and posture. Specifically, the position control unit M1 successively acquires current drive states of the motor group 12, and successively acquires the control amounts of the motor group 12 so as to be able to realize the objective position and posture. For example, the position control unit M1 acquires the control amounts of the motor group 12 through feedback control such as proportional-integral-derivative (PID) control.

The force control unit M2 is a module which successively acquires control amounts for commanding the motor group 12 similar to the position control unit M1. The force control unit M2 sets objective force and moment which are applied to the end effector 20, and acquires the control amount of the motor group 12 so as to cause the objective force and moment to be in a state of being applied to the end effector 20. Specifically, from the force sensor P, the force control unit M2 successively acquires current force and moment which are applied to the end effector 20, and successively acquires the control amount of the motor group 12 based on the current force and moment. For example, the force control unit M2 sets mechanical impedance (inertia, attenuation coefficient, rigidity, and the like) in accordance with an external force, and acquires the control amount of the motor group 12 so as to realize the impedance in a pseudo manner. Moreover, the force control unit M2 resets the force sensor P in a state where the tip end of the end effector 20 is oriented vertically downward interfering with nothing, and performs gravity compensation for the measurement result of the force sensor P in accordance with the posture of the end effector 20.

The output unit M3 aggregates (for example, linear combination) the control amount output from the position control unit M1 and the control amount output from the force control unit M2, and generates a control signal which is output to the motor group 12. The controller 40 can cause both position controlling performed by the position control unit M1 and force controlling performed by the force control unit M2 to be effective, and can cause any one thereof to be ineffective. In the embodiment, the control signal is a signal subjected to pulse width modulation (PWM). According to the above-described constitution, the end effector 20 is in the objective posture at the objective position, and thus, the arm 10 can be driven so as to apply the objective force and moment to the end effector 20. Moreover, the output unit M3 outputs a control signal for controlling the end effector 20.

### 3. Constitution of End Effector

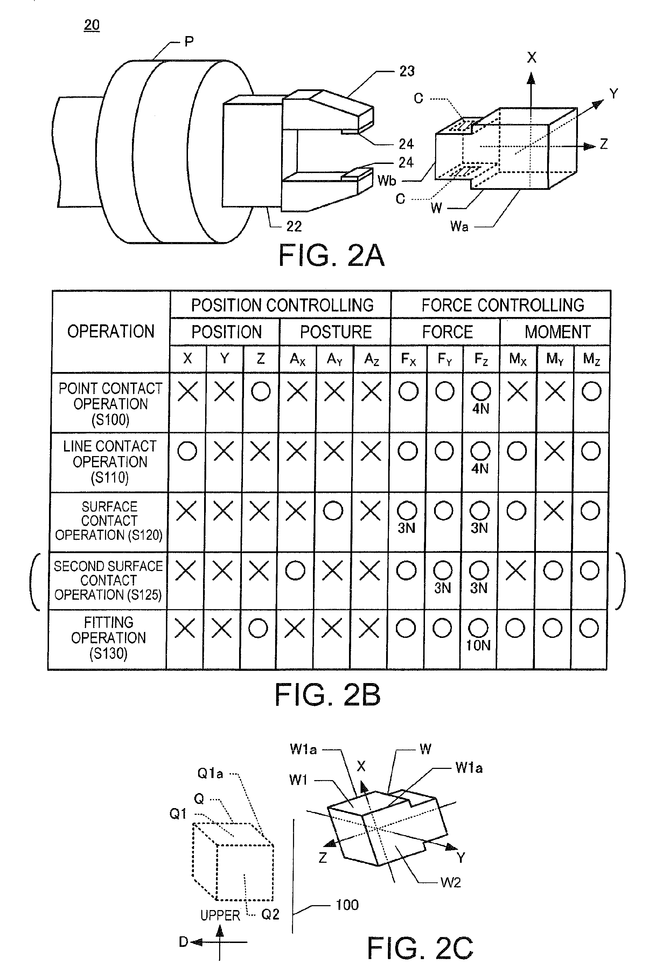

Fig. 2A is a perspective view of the end effector 20. The end effector 20 includes the force sensor P, a gripper 22, chucks 23 and 23, and elastic members 24 and 24. The gripper 22 includes an actuator for causing the chucks 23 and 23 (grip sections) to approach and be separated mutually, and the actuator is controlled by a control signal from the output unit M3 of the controller 40. The tip ends of the chucks 23 and 23 are oriented in the tip end direction of the arm 10. Surfaces of the chucks 23 and 23 facing each other in the mutually approaching direction are parallel to each other, and the elastic members 24 and 24 are bonded to the tip end portions on the surfaces facing each other.

In the embodiment, the elastic members 24 and 24 have the following constitution. Each of the elastic members 24 and 24 is formed of a rectangular plate-shaped urethane resin having the hardness of Shore A90. Each of the elastic members 24 and 24 is formed to have the thickness in the movement direction of the chucks 23 and 23 to be 2 mm, and to have the lengths in directions orthogonal to the movement direction to be respectively 20 mm and 10 mm. However, the elastic members 24 and 24 are acceptable as long as the members have elasticity equal to or greater than a predetermined standard. The elastic members 24 and 24 may be formed of a synthetic resin other than the urethane resin, or may employ different thickness and lengths.

The fitting member W is constituted of a fitting portion Wa and a grip portion Wb. The fitting portion Wa is a portion which has substantially the same shape as the receiving section Q, and is a portion which fits to the receiving section Q. In the strict sense, the fitting portion Wa has the smaller shape than the receiving section Q as much a predetermined common difference, and the common difference is smaller than positional accuracy in which the arm 10 and the end effector 20 can be controlled. In the embodiment, the fitting portion Wa is a rectangular parallelepiped. The grip portion Wb has the same width (in the Y-direction) as that of the fitting portion Wa, and is a rectangular parallelepiped having the thickness (in the X-direction) smaller than that of the fitting portion Wa. The chucks 23 and 23 grip the grip portion Wb via the elastic members 24 and 24 by interposing the grip portion Wb therebetween in the thickness direction. Contact ranges C in the grip portion Wb for the elastic members 24 and 24 are central portions on two surfaces of the grip portion Wb in the thickness direction. Therefore, when the chucks 23 and 23 grip the fitting member W, only the elastic members 24 and 24 come into contact with the fitting member W, and no member other than the elastic members 24 and 24 come into contact with the fitting member W.

### 4. Fitting Processing

Fig. 2B is a table showing contents of control of the controller 40 in fitting processing. Hereinafter, with reference to the table in Fig. 2B, each operation performed in fitting processing will be described in order. Fig. 2B illustrates directions of position controlling for each operation executed by the position control unit M1. The objective position or posture is set for the position or the posture in the direction corresponding to the section where the circle is marked in Fig. 2B, thereby acquiring the control amount by which the position control unit M1 commands the motor group 12 so as to realize the position or the posture. Regarding the position or the posture in the direction corresponding to the section where the cross is marked, the control amount by which the position control unit M1 commands the motor group 12 is acquired so as to maintain the current position and posture. Moreover, Fig. 2B illustrates the directions of force controlling executed by the force control unit M2 for each operation. The force control unit M2 acquires the control amount for commanding the motor group 12 in accordance with a force or a moment in the direction corresponding to the section where the circle is marked in Fig. 2B. The numerical value indicated below the circle denotes the objective force in force controlling. The section where the circle is marked but no objective force is indicated denotes a target for which the motor group 12 is controlled so as to cause the magnitude of a force or a moment to be within a normal range (for example, within a range where no engagement is caused).

Fig. 2C is an explanatory diagram of a standard direction in fitting processing. First, having the directions on the sheet illustrated in Fig. 2A as the standards, a direction vertically penetrating the fitting member W (the thickness direction) is defined as the X-direction, a direction inwardly penetrating the fitting member W (the width direction) is defined as the Y-direction, and a direction laterally penetrating the fitting member W (the length direction) is defined as the Z-direction. The postures (the rotation angles) about the axes in the X-direction, the Y-direction, and the Z-direction are respectively represented by A_{X}, A_{Y}, and A_{Z}. Forces in the X-direction, the Y-direction, and the Z-direction are respectively represented by F_{X}, F_{Y}, and F_{Z}. The moments about the axes in the X-direction, the Y-direction, and the Z-direction are respectively represented by M_{X}, M_{Y}, and M_{Z}. The position and the direction in which the chucks 23 and 23 grip the fitting member W is known so that the robot 1 can recognize the X-direction, the Y-direction, and the Z-direction in a state of gripping the fitting member W. However, an error may be included in the X-direction, the Y-direction, and the Z-direction which are recognized by the robot 1.

As illustrated in Fig. 2C, a surface on the upper side of the receiving section Q is defined as a receiving flat surface Q1, and a straight line at the end of the receiving flat surface Q1 in a direction opposite to a fitting direction D is defined as a receiving straight line Q1a. The fitting direction D is a direction in which fitting of the fitting member W is performed, and is a direction parallel to the receiving flat surface Q1. In addition, a surface on the upper side of the fitting member W in the X-direction (the thickness direction) is defined as a fitting flat surface W1, and a straight line at the end of the fitting flat surface W1 in a direction orthogonal to the fitting direction D (the Y-direction (the width direction)) is defined as a fitting straight line W1a.

First, when executing fitting processing, the controller 40 resets the force sensor P. In this case, the controller 40 controls the arm 10 so as to cause the tip end of the end effector 20 to be oriented vertically downward interfering with no substance. Subsequently, the controller 40 starts gravity compensation for the measurement result of the force sensor P. In this manner, based on the measurement result of the force sensor P, the force control unit M2 can appropriately perform force controlling of the arm 10.

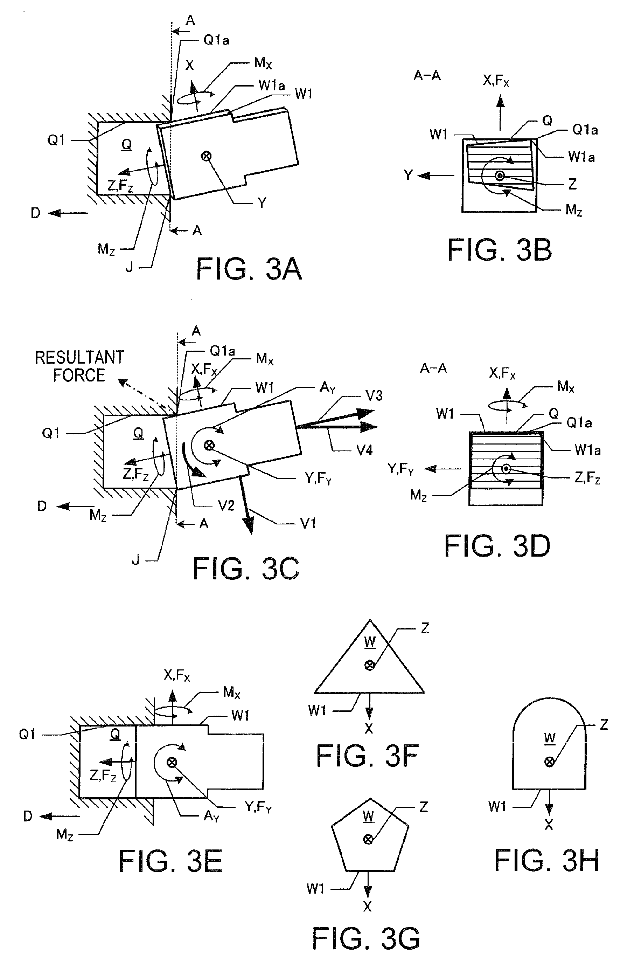

First, the controller 40 performs an approaching operation (not shown in Fig. 2B). The approaching operation is an operation for causing the fitting member W and the receiving section Q to be in a state of approaching each other. During the approaching operation, the controller 40 performs position controlling so as to move the fitting member W to an objective position in the Z-direction, thereby achieving a state where a surface of the fitting member W in the Z-direction and a corner portion J (refer to Fig. 3A) of the receiving section Q are in contact with each other. In the embodiment, the surface of the fitting member W in the Z-direction and the corner portion J of the receiving section Q are caused to be in the state of being in contact with each other. However, if both thereof are at positions sufficiently close to each other, it is not necessarily to be in contact with each other.

### 4-1. Point-contact Operation

Subsequently, the controller 40 performs a point contact operation (Step S100). The point contact operation is an operation for causing the fitting member W and the receiving section Q to be in point contact with each other. In the point contact operation, the controller 40 performs position controlling so as to move the fitting member W to an objective position in the X-direction. In addition, during the point contact operation, the controller 40 performs force controlling so as to cause a force F_{Z} in the Z-direction to be the objective force of 4N.

Fig. 3A is an explanatory diagram of an operation illustrating a state of the fitting member W after the point contact operation. The embodiment illustrates a state where the surface in the Z-direction comes into contact with the corner portion J of the receiving section Q and a force of 4N is applied thereto. As the fitting member W is intended to move to the objective position (the objective position to which the fitting member W is moved inside the receiving section Q) in the X-direction, the fitting straight line W1a which is the end of the fitting flat surface W1 in the width direction can come into point contact with the receiving straight line Q1a. The objective position in the Z-direction during the point contact operation is a position which is subjected to teaching in advance so as to cause the fitting straight line W1a and the receiving straight line Q1a to be in point contact with each other.

Fig. 3B is an arrow sectional view taken along line A-A (in Fig. 3A) illustrating a state of the fitting member W after the point contact operation. As illustrated in Fig. 3B, the fitting straight line W1a of the fitting member W is in point contact with the receiving straight line Q1a of the receiving section Q at one point.

### 4-2. Line-contact Operation

Subsequently, the controller 40 performs a line contact operation (Step S110). The line contact operation is an operation for causing the fitting flat surface W1 to be in line contact with the receiving straight line Q1a while maintaining the state where the fitting straight line W1a constituting the end of the fitting flat surface W1 in a direction orthogonal to the fitting direction D is in point contact with the receiving straight line Q1a. In the line contact operation, the controller 40 performs position controlling so as to move the fitting member W to the objective position in the X-direction. In addition, during the line contact operation, the controller 40 performs force controlling so as to cause the force F_{Z} in the Z-direction to be the objective force of 4N.

As illustrated in Figs. 3A and 3B, while maintaining the state where the surface in the Z-direction is in contact with the corner portion J of the receiving section Q and a force of 4N is applied thereto, the fitting member W is intended to move to the objective position (the objective position where the fitting member W is caused to approach the receiving flat surface Q1) in the X-direction. Here, the magnitude of a moment in an M_{X}-direction is controlled so as to be converged within a range close to zero, and thus, the fitting flat surface W1 can be brought into line contact with the receiving straight line Q1a. The objective position in the X-direction during the line contact operation is a position which is subjected to teaching in advance so as to cause the fitting flat surface W1 and the receiving straight line Q1a to be in line contact with each other.

Fig. 3C is an explanatory diagram of an operation illustrating a state of the fitting member W after the line contact operation. Fig. 3D is an arrow sectional view taken along line A-A (in Fig. 3C) illustrating a state of the fitting member W after the line contact operation. As illustrated in Fig. 3D, the fitting flat surface W1 of the fitting member W is in line contact with the receiving straight line Q1a of the receiving section Q.

In this manner, while maintaining the state where the fitting straight line W1a is in point contact with a point on the receiving straight line Q1a, the fitting flat surface W1 which includes the fitting straight line W1a intactly comes into line contact with the receiving straight line Q1a. Thus, the fitting flat surface W1 can be prevented from erroneously coming into line contact with ridgelines other than the receiving straight line Q1a. In other words, the fitting flat surface W1 and the receiving straight line Q1a can be reliably in line contact with each other.

### 4-3. Surface-contact Operation

Subsequently, the controller 40 performs a surface contact operation (Step S120). The surface contact operation is an operation for causing the fitting flat surface W1 to be in surface contact with the receiving flat surface Q1 while maintaining the state where the fitting flat surface W1 is in line contact with the receiving straight line Q1a constituting the end of the receiving flat surface Q1 in a direction opposite to the fitting direction D. In the surface contact operation, the controller 40 performs position controlling in which the fitting member W rotates so as to cause a posture A_{Y} about the axis in the Y-direction to be the objective posture A_{Y}. In addition, during the surface contact operation, the controller 40 performs force controlling so as to cause forces F_{X} and F_{Z} respectively in the X-direction and the Z-direction to be the objective force of 3N.

As illustrated in Figs. 3C and 3D, while maintaining the state where the fitting flat surface W1 and the receiving straight line Q1a are in line contact with each other and a force of 3N (a resultant force in a direction of the alternate long and short dash line arrow) is applied in each of the X-direction and the Z-direction, the fitting member W is intended to rotate so as to be in the objective posture A_{Y} (the objective posture in which the fitting flat surface W1 becomes parallel to the receiving flat surface Q1) about the axis in the Y-direction. Accordingly, the fitting member W can rotate about the receiving straight line Q1a, and the fitting flat surface W1 can be brought into surface contact with the receiving flat surface Q1. Fig. 3E is an explanatory diagram of an operation illustrating a state of the fitting member W after the surface contact operation. The objective posture A_{Y} about the axis in the Y-direction during the surface contact operation is a posture which is subjected to teaching in advance so as to cause the fitting flat surface W1 and the receiving flat surface Q1 to be in surface contact.

In this manner, while maintaining the state where the receiving straight line Q1a and the fitting flat surface W1 are in line contact with each other, the fitting flat surface W1 intactly comes into surface contact with the receiving flat surface Q1 which includes the receiving straight line Q1a. Thus, the fitting flat surface W1 can be prevented from erroneously coming into surface contact with a surface other than the receiving flat surface Q1. In other words, the fitting flat surface W1 and the receiving flat surface Q1 can be reliably in surface contact with each other.

### 4-4. Fitting Operation

Subsequently, the controller 40 performs a fitting operation (Step S130). The fitting operation is an operation for moving the fitting member W so as to fit to the receiving section Q while maintaining a state where the fitting flat surface W1 is in surface contact with the receiving flat surface Q1 which is a flat surface parallel to the fitting direction D included in the receiving section Q. In the fitting operation, the controller 40 performs position controlling so as to move the fitting member W to the objective position in the Z-direction. In addition, during the fitting operation, the controller 40 performs force controlling so as to cause the force F_{Z} in the Z-direction to be the objective force of 10N, and the controller 40 sets impedance of force controlling in the Z-direction so as to minimize an occurrence of displacement compared to a case of performing other operations. Accordingly, the fitting member W can be strongly and reliably pushed in until the surface of the fitting member W in the Z-direction abuts on the surface of the receiving section Q in the fitting direction D. The controller 40 also performs force controlling in the X-direction by the force F_{X} having a predetermined magnitude, and thus, it is possible to maintain a state where the receiving flat surface Q1 and the fitting flat surface W1 are in surface contact with each other.

In the above-described constitution, the fitting member W having no curved surface can fit to the receiving section Q. In addition, in a state where the receiving flat surface Q1 and the fitting flat surface W1 are in surface contact with each other, the fitting member W can be positioned with respect to the receiving section Q in a direction orthogonal to the fitting flat surface W1. Moreover, the fitting member W can be reliably moved in the fitting direction D by moving the fitting member W in a state where the receiving flat surface Q1 and the fitting flat surface W1 are in surface contact with each other, that is, in a state where the fitting flat surface W1 is slidable with respect to the receiving flat surface Q1.

In addition, the elastic members 24 and 24 interposed between the fitting member W and the chucks 23 and 23 are provided in a contact spot of the fitting member W and the chucks 23 and 23 (grip sections). Accordingly, in a state where the fitting member W is in contact with the receiving section Q, even though a force or a moment which changes the posture of the fitting member W is applied thereto, the force or the moment can be absorbed through elastic deformation of the elastic members 24 and 24. In other words, the fitting member W is prevented from changing in posture which cannot be followed by performing force controlling of the robot. Thus, work can be performed more accurately.

### 4-5. Abnormality Recovery Operation

When abnormality is detected based on the measurement result of the force sensor P, the controller 40 performs an abnormality recovery operation. For example, during the fitting operation, when the fitting member W is intended to be moved to an objective position in the Z-direction, if a force or a moment which is equal to or greater than a predetermined threshold value is measured by the force sensor P, the controller 40 may determine that the fitting member W engages with the receiving section Q, thereby detecting the state as abnormality.

In the embodiment, the controller 40 performs position controlling as the abnormality recovery operation in which the fitting member W is moved in a direction orthogonal to the fitting flat surface W1. In other words, as indicated by the arrow V1 in Fig. 3C, the controller 40 performs position controlling in which the fitting member W is moved in the X-direction (including oscillation). Furthermore, as indicated by the arrow V1 in Fig. 3C, the controller 40 may perform force controlling in which the fitting member W is applied with a force generating acceleration for moving the fitting member W in the X-direction. Accordingly, position controlling or force controlling of the fitting member W can be performed so as to cancel surface contact between the fitting flat surface W1 and the receiving flat surface Q1, or line contact between the fitting flat surface W1 and the receiving straight line Q1a. Therefore, it is possible to cancel the abnormality which occurs when position controlling or force controlling of the fitting member W is performed for surface contact between the fitting flat surface W1 and the receiving flat surface Q1, or line contact between the fitting flat surface W1 and the receiving straight line Q1a.

In addition, in the embodiment, the controller 40 performs position controlling as the abnormality recovery operation in which the fitting member W rotates about the receiving straight line Q1a. In other words, as indicated by the arrow V2 in Fig. 3C, the controller 40 performs position controlling in which the posture A_{Y} of the fitting member W about the axis in the Y-direction is changed (including oscillation). Furthermore, as indicated by the arrow V2 in Fig. 3C, the controller 40 may perform force controlling in which a moment generating angular acceleration for changing the posture A_{Y} of the fitting member W about the axis in the Y-direction is applied to the fitting member W. As described above, during the surface contact operation, the fitting flat surface W1 can be brought into surface contact with the receiving flat surface Q1 which includes the receiving straight line Q1a by rotating the fitting member W about the receiving straight line Q1a. However, abnormality may occur during the aforementioned process. The above-described abnormality which occurs during the surface contact operation can be cancelled by performing position controlling or force controlling similar to that in the surface contact operation.

In addition, during the embodiment, the controller 40 performs position controlling as the abnormality recovery operation in which the fitting member W is moved in a direction orthogonal to the receiving straight line Q1a and parallel to the fitting flat surface W1. In other words, as indicated by the arrow V3 in Fig. 3C, the controller 40 performs position controlling in which the fitting member W is moved in the Z-direction (including oscillation). Furthermore, as indicated by the arrow V3 in Fig. 3C, the controller 40 may perform force controlling in which a force generating acceleration for moving the fitting member W in the Z-direction is applied to the fitting member W. Moreover, as indicated by the arrow V4 in Fig. 3C, the controller 40 may perform position controlling in which the fitting member W is moved in the direction orthogonal to the receiving straight line Q1a and parallel to the receiving flat surface Q1 (including oscillation), or may perform force controlling in which a force is applied in the aforementioned direction. Here, in a state where the fitting member W is not in contact with the receiving section Q, the fitting straight line W1a can be brought into point contact with the receiving straight line Q1a by moving the fitting member W in the direction orthogonal to the receiving straight line Q1a and parallel to the fitting flat surface W1 or the receiving flat surface Q1. However, abnormality may occur during the aforementioned process. The above-described abnormality which occurs while the fitting straight line W1a is brought into point contact with the receiving straight line Q1a can be cancelled by performing position controlling or force controlling in a direction parallel to that in the process.

### 5. Alternative Embodiment

In the above-described first embodiment, the surface contact operation is performed only once. However, the controller 40 may perform a second surface contact operation as shown in parenthesis in Fig. 2B (Step S125). In other words, as illustrated in Fig. 3E, while maintaining the state where the fitting flat surface W1 is in surface contact with the receiving flat surface Q1, the controller 40 may bring a second fitting flat surface W2 into surface contact with a second receiving flat surface Q2 as illustrated in Fig. 2C, by changing the posture A_{X} about the axis in the X-direction. Accordingly, the fitting member W can be positioned from two directions which are orthogonal to each other. Thus, the fitting member W can fit to the receiving section Q more reliably.

In addition, the fitting member W is acceptable as long as one flat surface which is parallel to the fitting direction D is included, and the shape thereof is not necessarily to be rectangular when seen in the fitting direction D. For example, the fitting member W may be a triangular prism as illustrated in Fig. 3F, or may be a pentagonal prism as illustrated in Fig. 3G. In such fitting members W as well, the fitting member W can fit to the receiving section Q by using at least one fitting flat surface W1. Moreover, the fitting member W may have a curved surface, and may have a shape in which a column and a quadrangular prism are combined as illustrated in Fig. 3H. In this case as well, the fitting member W can fit to the receiving section Q by using any flat surface other than the curved surface.

In addition, in the above-described first embodiment, point contact, line contact, and surface contact are detected based on the measurement result of the force sensor P. However, for example, point contact, line contact, and surface contact may be detected by recognizing an image captured by a camera. In addition, the robot 1 does not necessarily perform the abnormality recovery operation. For example, an operator may be notified when abnormality is detected. Regarding the constitution which includes the elastic members 24 and 24 interposed between the fitting member W and the chucks 23 and 23, for example, the columnar or elliptical columnar fitting member W having no fitting flat surface which is a flat surface parallel to the fitting direction may be caused to fit to the receiving section Q. In this case as well, the fitting member W is prevented from changing in posture which cannot be followed by performing force controlling of the robot. Thus, work can be performed more accurately.

### Second Embodiment

Hereinafter, descriptions will be given regarding a second embodiment of the invention in the following order with reference to the accompanying drawings. The same numerals and signs are applied to the corresponding constitution elements in each diagram, and thus, overlapping descriptions will not be repeated. Moreover, the same numerals and signs are applied to the constitution elements similar to those in the above-described first embodiment, and thus, overlapping descriptions will not be repeated.
- 1.: Constitution of Robot according to Second Embodiment
- 2.: Constitution of Controller
- 3.: Constitution of End Effector
- 4.: Fitting Processing
- 4-1.: Point-contact Operation
- 4-2.: Line-contact Operation
- 4-3.: Surface-contact Operation
- 4-4.: Fitting Operation
- 4-5.: Abnormality Recovery Operation
- 5.: Alternative Embodiment

### 1. Constitution of Robot

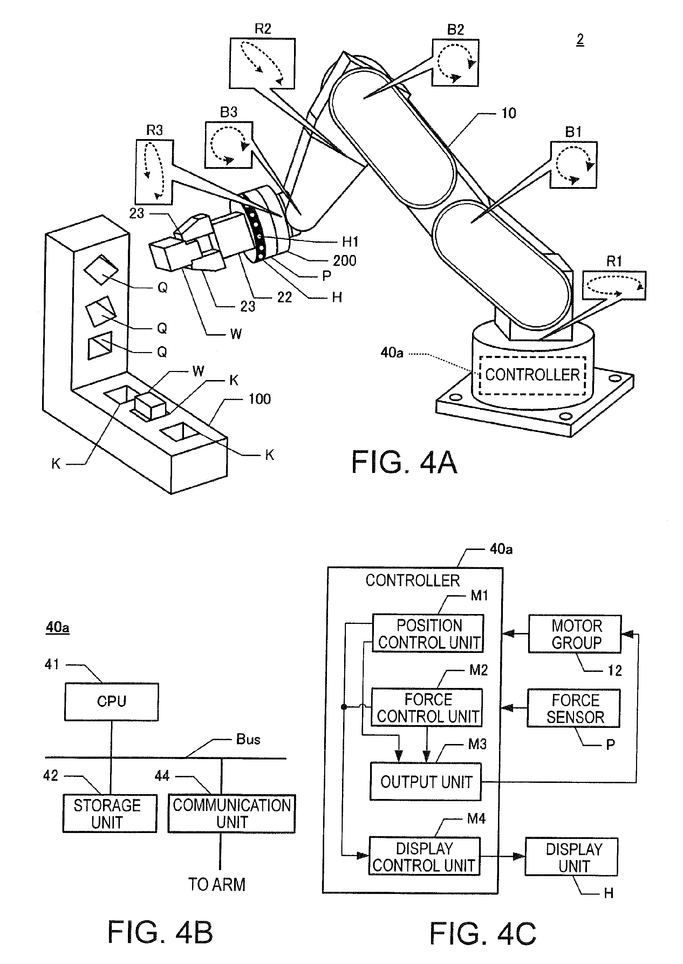

Fig. 4A is a perspective view of a robot 2 according to the second embodiment of the invention. As illustrated in Fig. 4A, the robot 2 includes the arm 10, an end effector 200, and a controller 40a. Since the arm 10 is the same as that in the first embodiment, and thus, the descriptions thereof will not be repeated.

The end effector 200 is mounted in the tip end of the arm 10. As the six axes arm 10 is driven, the end effector 200 can be in an arbitrary posture (angle) at an arbitrary position within a predetermined movable range. The end effector 200 is provided with the force sensor P and a ring light H. The force sensor P is a sensor which measures three axes forces applied to the end effector 200, and moments applied about the three axes. The ring light H includes multiple (sixteen) light emitting diodes (LED) as emission sections H1, thereby constituting a display unit according to the invention.

The robot 2 is a general-purpose robot which can perform various types of work by conducting teaching. In the embodiment, teaching for causing the fitting member W to fit to the receiving section Q is conducted with respect to the controller 40a. The fitting member W is inserted into a holding section K of the fitting rack 100, and the robot 2 grips the fitting member W which is inserted into the holding section K. Then, the robot 2 causes the fitting member W to fit to the receiving section Q of the fitting rack 100.

### 2. Constitution of Controller

The controller 40a is a computer for controlling the robot 2. As described in the embodiment, the controller 40a may be included inside the robot 2. Moreover, the controller 40a may be included outside the robot 2 so as to be able to communicate with the robot 2, thereby constituting a robot system which includes the controller 40a and the robot 2. Naturally, the controller 40a may be realized by the computer inside the robot 2 and the computer outside the robot 2 in cooperation with each other.

Fig. 4B is a block diagram of hardware of the controller 40a. For example, the controller 40a includes the central processing unit (CPU) 41, the storage unit 42, and the communication unit 44. The controller 40 communicates with the arm 10 via the communication unit 44. The constitution elements are connected to one another via the bus Bus and the input/output mechanism (not illustrated) so as to be able to communicate with one another. The CPU 41 executes various programs stored in the storage unit 42. For example, the storage unit 42 includes the hard disk drive (HDD), the solid state drive (SSD), the electrically erasable programmable read-only memory (EEPROM), the read-only memory (ROM), the random access memory (RAM), and the like. The storage unit 42 stores various types of information, images, and programs processed by the controller 40a. The storage unit 42 may be an outer mounted-type storage device which is connected through a digital input/output port for a USB and the like, in place of the storage unit built in the controller 40a. For example, the communication unit 44 is constituted by including the digital input/output port for a USB and the like, or an ethernet port.

Fig. 4C is a block diagram of a function of the robot. The controller 40a controls the arm 10 so as to cause the fitting member W to fit to the receiving section Q. Therefore, the controller 40a includes the position control unit M1, the force control unit M2, the output unit M3, and a display control unit M4. For example, a part or all of the functional sections are realized by the CPU 41 executing various programs which are stored in the storage unit 42. In addition, a part or all of the functional sections may be functional sections of hardware such as large scale integration (LSI) or an application specific integrated circuit (ASIC).

In the embodiment, the controller 40a outputs a control signal to the motor group 12 which is constituted of motors respectively corresponding to the joints B1 to B3 and the torsional joints R1 to R3 of the arm 10. The position control unit M1, the force control unit M2, and the output unit M3 constituting the controller 40a are the same as those in the first embodiment, and thus, the descriptions thereof will not be repeated. The controller 40a can cause both position controlling performed by the position control unit M1 and force controlling performed by the force control unit M2 to be effective, and can cause any one thereof to be ineffective. In the embodiment, the control signal is a signal subj ected to pulse width modulation (PWM) . According to the above-described constitution, the end effector 200 is in the objective posture at the objective position, and thus, the arm 10 can be driven so as to apply the objective force and moment to the end effector 200. Moreover, the output unit M3 outputs a control signal for controlling the end effector 200.

The display control unit M4 controls a display state of the ring light H in accordance with a control state of the end effector 200 which is a movable unit. The state of the end effector 200 also depends on a state of the arm 10. Therefore, the control state of the end effector 200 denotes a state of position controlling and force controlling which are executed by the position control unit M1 and the force control unit M2 with respect to the arm 10 and the end effector 200. The display control unit M4 acquires the state of position controlling and force controlling from the position control unit M1 and the force control unit M2, and controls the display state of the ring light H in accordance with the acquired state. Specifically, the display control unit M4 generates a drive current which is supplied to each of the emission sections H1 constituting the ring light H.

### 3. Constitution of End Effector

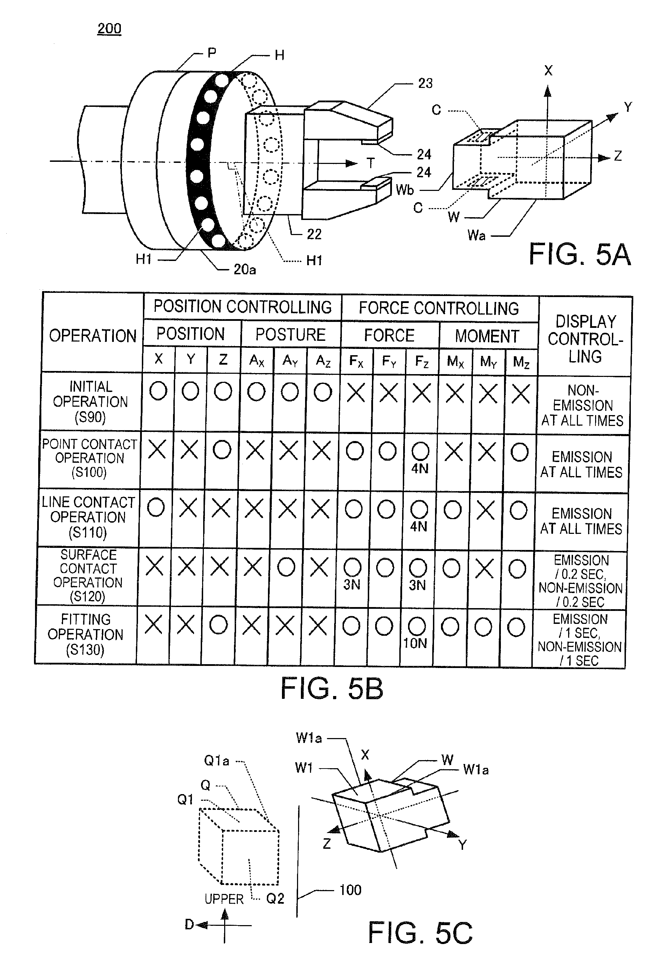

Fig. 5A is a perspective view of the end effector 200. The end effector 200 includes the force sensor P, the ring light H, the gripper 22, the chucks 23 and 23, and the elastic members 24 and 24. The end effector 200 includes a columnar column portion 20a having an axis T as the center axis which extends in the length direction of the arm 10, and the column portion 20a is provided with the force sensor P and the ring light H. The sixteen emission sections H1 are arranged at positions so as to be rotationally symmetrical about the axis T of the arm 10 in the length direction. In other words, the sixteen emission sections H1 are annularly arranged along the side surface of the column portion 20a, and all angles, at each of which perpendicular lines (alternate long and two short dashes lines) drawn down to the axis T from the adjacent emission sections H1 intersect with each other at the axis T, exhibit 360/16 = 22.5 degrees.

The gripper 22 includes the actuator for causing the chucks 23 and 23 (grip sections) to approach and be separated mutually, and the actuator is controlled by a control signal from the output unit M3 of the controller 40a. The tip ends of the chucks 23 and 23 are oriented in the tip end direction of the arm 10. The surfaces of the chucks 23 and 23 facing each other in the mutually approaching direction are parallel to each other, and the elastic members 24 and 24 are bonded to the tip end portions on the surfaces facing each other.

The constitution of the elastic members 24 and 24 in the embodiment is the same as that in the first embodiment, and thus, the descriptions thereof will not be repeated. In addition, the constitution of the fitting member W is the same as that in the first embodiment as well, and thus, the descriptions thereof will not be repeated.

### 4. Fitting Processing

Fig. 5B is a table showing contents of control of the controller 40a in fitting processing. Hereinafter, with reference to the table in Fig. 5B, each operation performed in fitting processing will be described in order. Fig. 5B illustrates directions of position controlling for each operation executed by the position control unit M1. The objective position or posture is set for the position or the posture in the direction corresponding to the section where the circle is marked in Fig. 5B, thereby acquiring the control amount by which the position control unit M1 commands the motor group 12 so as to realize the position or the posture. Moreover, Fig. 5B illustrates the directions of force controlling executed by the force control unit M2 for each operation. The force control unit M2 acquires the control amount for commanding the motor group 12 in accordance with a force or a moment in the direction corresponding to the section where the circle is marked in Fig. 5B. The numerical value indicated below the circle denotes the objective force in force controlling. The section where the circle is marked but no objective force is indicated denotes a target for which the motor group 12 is controlled so as to cause the magnitude of a force or a moment to be within a normal range (for example, within a range where no engagement is caused). In addition, Fig. 5B shows contents of the display control of the ring light H executed by the display control unit M4 in each operation.

Fig. 5C is an explanatory diagram of the standard direction in fitting processing. Since the standard direction is the same as that in the first embodiment, the descriptions thereof will not be repeated. The position and the direction in which the chucks 23 and 23 grip the fitting member W is known so that the robot 2 can recognize the X-direction, the Y-direction, and the Z-direction in a state of gripping the fitting member W. However, an error may be included in the X-direction, the Y-direction, and the Z-direction which are recognized by the robot 2.

As illustrated in Fig. 5C, the surface on the upper side of the receiving section Q is defined as the receiving flat surface Q1, and the straight line at the end of the receiving flat surface Q1 in the direction opposite to the fitting direction D is defined as the receiving straight line Q1a. The fitting direction D is the direction in which fitting of the fitting member W is performed, and is the direction parallel to the receiving flat surface Q1. In addition, the surface on the upper side of the fitting member W in the X-direction (the thickness direction) is defined as the fitting flat surface W1, and the straight line at the end of the fitting flat surface W1 in the direction orthogonal to the fitting direction D (the Y-direction (the width direction)) is defined as the fitting straight line W1a.

First, when executing fitting processing, the controller 40a performs an initial operation (Step S90). In the initial operation, the controller 40a resets the force sensor P. In this case, the controller 40a performs position controlling of the arm 10 toward the objective position and the posture so as to allow the tip end of the end effector 200 to be oriented vertically downward interfering with no substance. Subsequently, the controller 40a starts gravity compensation for the measurement result of the force sensor P. In this manner, based on the measurement result of the force sensor P, the force control unit M2 can appropriately perform force controlling of the arm 10.

During a time period in which the initial operation is performed, the display control unit M4 performs display control of the ring light H so as to cause all emitters H to be in non-emission states at all times.

### 4-1. Point-contact Operation

Subsequently, the controller 40a performs the point contact operation (Step S100). The point contact operation is an operation for causing the fitting member W and the receiving section Q to be in point contact with each other. In the point contact operation, the controller 40a performs position controlling so as to move the fitting member W to an objective position in the Z-direction. In addition, during the point contact operation, the controller 40a performs force controlling so as to cause the force F_{Z} in the Z-direction to be the objective force of 4N.

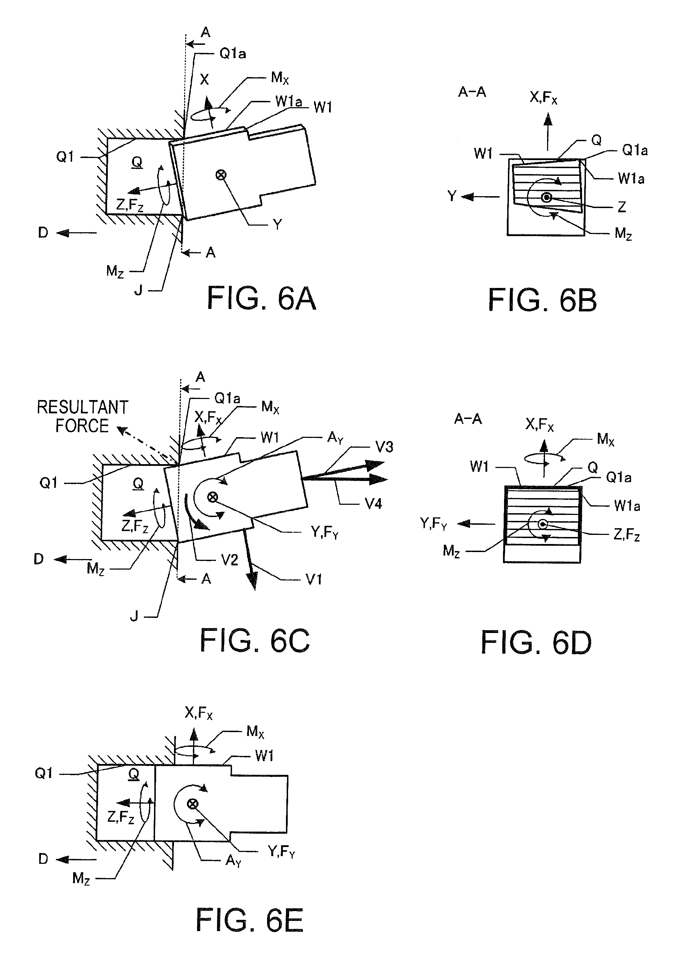

Fig. 6A is an explanatory diagram of an operation illustrating a state of the fitting member W after the point contact operation. The embodiment illustrates the state where the surface in the Z-direction comes into contact with the corner portion J of the receiving section Q and a force of 4N is applied thereto. As the fitting member W is intended to move to the objective position (the objective position to which the fitting member W is moved inside the receiving section Q) in the Z-direction. Here, position controlling is not performed for the position in the X-direction and the Y-direction, and the posture in each direction. Therefore, as the fitting member W changes the position in the X-direction and the Y-direction, and the posture in each direction so as to move to the objective position in the Z-direction, the fitting straight line W1a which is the end of the fitting flat surface W1 in the width direction can come into point contact with the receiving straight line Q1a. The objective position in the Z-direction during the point contact operation is a position which is subjected to teaching in advance so as to cause the fitting straight line W1a and the receiving straight line Q1a to be in point contact with each other.

Fig. 6B is an arrow sectional view taken along line A-A (in Fig. 6A) illustrating a state of the fitting member W after the point contact operation. As illustrated in Fig. 6B, the fitting straight line W1a of the fitting member W is in point contact with the receiving straight line Q1a of the receiving section Q at one point. In the embodiment, the fitting straight line W1a and the receiving straight line Q1a are brought into point contact with each other by moving the fitting member W in the Z-direction. However, the fitting straight line W1a and the receiving straight line Q1a may be brought into point contact with each other by moving the fitting member W in the X-direction.

During a time period in which the point contact operation is performed, the display control unit M4 performs display control of the ring light H so as to cause all the emitters H to be in emission states at all times.

### 4-2. Line-contact Operation

Subsequently, the controller 40a performs a line contact operation (Step S110). The line contact operation is an operation for causing the fitting flat surface W1 to be in line contact with the receiving straight line Q1a while maintaining the state where the fitting straight line W1a constituting the end of the fitting flat surface W1 in the direction orthogonal to the fitting direction D is in point contact with the receiving straight line Q1a. In the line contact operation, the controller 40a performs position controlling so as to move the fitting member W to the objective position in the X-direction. In addition, during the point contact operation, the controller 40a performs force controlling so as to cause the force F_{Z} in the Z-direction to be the objective force of 4N.

As illustrated in Figs. 6A and 6B, while maintaining the state where the surface in the Z-direction is in contact with the corner portion J of the receiving section Q and a force of 4N is applied thereto, the fitting member W is intended to move to the objective position (the objective position where the fitting member W is caused to approach the receiving flat surface Q1) in the X-direction. Here, position controlling is not performed for the position in the Y-direction and the Z-direction, and the posture in each direction. Therefore, as the fitting member W changes the position in the Y-direction and the Z-direction, and the posture in each direction so as to move to the objective position in the X-direction, the fitting flat surface W1 can be brought into line contact with the receiving straight line Q1a. The objective position in the X-direction during the line contact operation is a position which is subjected to teaching in advance so as to cause the fitting flat surface W1 and the receiving straight line Q1a to be in line contact with each other.

Fig. 6C is an explanatory diagram of an operation illustrating a state of the fitting member W after the line contact operation. Fig. 6D is an arrow sectional view taken along line A-A (in Fig. 6C) illustrating a state of the fitting member W after the line contact operation. As illustrated in Fig. 6D, the fitting flat surface W1 of the fitting member W is in line contact with the receiving straight line Q1a of the receiving section Q.

In this manner, while maintaining the state where the fitting straight line W1a is in point contact with a point on the receiving straight line Q1a, the fitting flat surface W1 which includes the fitting straight line W1a intactly comes into line contact with the receiving straight line Q1a. Thus, the fitting flat surface W1 can be prevented from erroneously coming into line contact with ridgelines other than the receiving straight line Q1a. In other words, the fitting flat surface W1 and the receiving straight line Q1a can be reliably in line contact with each other.

During a time period in which the line contact operation is performed, the display control unit M4 performs display control of the ring light H so as to cause all the emitters H to be in emission states at all times.

### 4-3. Surface-contact Operation

Subsequently, the controller 40a performs the surface contact operation (Step S120). The surface contact operation is the same as that in the first embodiment, and thus, the descriptions thereof will not be repeated.

During a time period in which the surface contact operation is performed, the display control unit M4 sets the emission time period which is a time period in which all the emitters H emit light simultaneously, and the non-emission time period which is a time period in which all the emitters H emit no light simultaneously. During the time period in which the surface contact operation is performed, the display control unit M4 performs display control of the ring light H so as to alternately switch the emission time period and the non-emission time period. In addition, during the time period in which the surface contact operation is performed, the display control unit M4 sets the length of the emission time period to 0.2 seconds, and sets the length of the non-emission time period to 0.2 seconds.

### 4-4. Fitting Operation

Subsequently, the controller 40a performs a fitting operation (Step S130). The fitting operation is an operation for moving the fitting member W so as to fit to the receiving section Q while maintaining a state where the fitting flat surface W1 is in surface contact with the receiving flat surface Q1 which is a flat surface parallel to the fitting direction D included in the receiving section Q. In the fitting operation, the controller 40a performs position controlling so as to move the fitting member W to the objective position in the Z-direction. In addition, during the fitting operation, the controller 40a performs force controlling so as to cause the force F_{Z} in the Z-direction to be the objective force of 10N, and the controller 40 sets impedance of force controlling in the Z-direction so as to minimize an occurrence of displacement compared to a case of performing other operations. Accordingly, the fitting member W can be strongly and reliably pushed in until the surface of the fitting member W in the Z-direction abuts on the surface of the receiving section Q in the fitting direction D. The controller 40a also performs force controlling in the X-direction by the force F_{X} having a predetermined magnitude, and thus, it is possible to maintain a state where the receiving flat surface Q1 and the fitting flat surface W1 are in surface contact with each other.

During a time period in which the fitting operation is performed, the display control unit M4 performs display control of the ring light H so as to alternately switch the emission time period and the non-emission time period. Specifically, during the time period in which the fitting operation is performed, the display control unit M4 sets the length of the emission time period to 1 second, and sets the length of the non-emission time period to 1 second.

In the above-described constitution, since the ring light H is included in the end effector 200 which is the movable unit, the end effector 200 and the state of the end effector 200 can be easily recognized in an associated manner.

Moreover, the display control unit M4 controls the display state of the ring light H in accordance with a state of force controlling of the arm 10 and the end effector 200. Accordingly, it is possible to recognize the state of a force which is currently applied to the end effector 200. Specifically, as the ring light H emits light during the time periods in which the point contact operation, the line contact operation, the surface contact operation, and the fitting operation are performed, it is recognized that a target force is applied between the end effector 200 and the fitting member W.

In addition, the display control unit M4 controls the display state of the ring light H in accordance with a state of position controlling of the end effector 200. Accordingly, it is possible to easily recognize the position or the posture of the end effector 200 at the present time or in the future. Specifically, as the display control of the ring light is performed so as to cause the emission time period and the non-emission time period to be 0.2 seconds during the time period in which the surface contact operation is performed, it is possible to recognize that the fitting member W is in a posture of rotating about the axis in the Y-direction.

In addition, the emission sections H1 are arranged at positions so as to be rotationally symmetrical about the axis T of the arm 10 in the length direction. Accordingly, visual recognition properties of the ring light H can be ensured even in the end effector 200 of which the visually recognized direction is changed.

In addition, in the above-described constitution, the fitting member W having no curved surface can fit to the receiving section Q. In addition, in a state where the receiving flat surface Q1 and the fitting flat surface W1 are in surface contact with each other, the fitting member W can be positioned with respect to the receiving section Q in a direction orthogonal to the fitting flat surface W1. Moreover, the fitting member W can be reliably moved in the fitting direction D by moving the fitting member W in a state where the receiving flat surface Q1 and the fitting flat surface W1 are in surface contact with each other, that is, in a state where the fitting flat surface W1 is slidable with respect to the receiving flat surface Q1.

In addition, the elastic members 24 and 24 interposed between the fitting member W and the chucks 23 and 23 are provided in a contact spot of the fitting member W and the chucks 23 and 23 (grip sections). Accordingly, in a state where the fitting member W is in contact with the receiving section Q, even though a force or a moment which changes the posture of the fitting member W is applied thereto, the force or the moment can be absorbed through elastic deformation of the elastic members 24 and 24. In other words, the fitting member W is prevented from changing in posture. Thus, it is possible to reduce force controlling of the robot which is necessary in accordance with a force or a moment applied to the fitting member W.

### 4-5. Abnormality Recovery Operation

When abnormality is detected based on the measurement result of the force sensor P, the controller 40a performs the abnormality recovery operation. The abnormality recovery operation is similar to that in the first embodiment, and thus, the descriptions thereof will not be repeated.

### 5. Alternative Embodiment

In the second embodiment, the presence and the absence of light emission of the ring light H, and the lengths of the emission time period and the non-emission time period are changed in accordance with the control state of the end effector 200. However, a different display state may be changed as the display state of the ring light H. For example, the display control unit M4 may change brightness of the emission sections H1 of the ring light H in accordance with the control state of the end effector 200. Specifically, the display control unit M4 may control the brightness of the emission sections H1 so as to be increased as the positional variation quantity or the angular variation quantity in position controlling increases, or may control the brightness of the emission sections H1 so as to be increased as the target force or moment in force controlling increases. Accordingly, the control state of the end effector 200 can be recognized based on the brightness of the emission sections H1.

Moreover, the display control unit M4 may change the light emission color of the emission sections H1 of the ring light H in accordance with the control state of the end effector 200. Accordingly, the control state of the end effector 200 can be recognized based on the light emission color of the emission sections H1. Moreover, the display control unit M4 may change the number of light emission of the emission sections H1 of the ring light H in accordance with the control state of the end effector 200. Accordingly, the control state of the end effector 200 can be recognized based on the number of light emission of the emission sections H1.

Moreover, the display control unit M4 may change the display state of the ring light H in accordance with prearranged position controlling which will be performed after a predetermined elapsed time, instead of the currently performed position controlling. Similarly, the display control unit M4 may change the display state of the ring light H in accordance with prearranged force controlling which will be performed after a predetermined elapsed time, instead of the currently performed force controlling. In addition, the display control unit M4 may change the lengths of the emission time period and the non-emission time period in accordance with the magnitude of the movement distance or the rotation angle in position controlling. Otherwise, the display control unit M4 may change the lengths of the emission time period and the non-emission time period in accordance with the magnitude of the target force or moment in position controlling. Moreover, the display control unit M4 may change the display state of the ring light H in accordance with whether or not the abnormality recovery operation is performed.

Here, the movable unit is acceptable as long as the unit is a member which is movable by the robot 2. A spot other than the tip end of the arm 10 may be the movable unit, and the ring light H may be provided in a spot other than the tip end of the arm 10. In addition, the emitters H1 of the ring light H are not necessarily to be the LED as long as the emitters are elements which can emit light (for example, a light bulb and an electro luminescence (EL) element). In addition, the display unit is not necessarily to be the ring light H in which the emitters H1 are annularly arranged. The display unit is acceptable as long as at least one emitter H1 is included. In addition, the emitters H1 may be arranged in a linear shape in the display unit. Naturally, the display control unit M4 may perform the display control of the ring light H when the robot 2 performing work other than the fitting work.

## Claims

1. A robot (1) comprising a controller (40), the controller (40) being configured to control the robot (1) to move a fitting member (W) in a fitting direction (D) so as to fit to a receiving section (Q),
wherein the receiving section (Q) comprises at least one receiving flat surface (Q1) running parallel to the fitting direction (D), and the fitting member (W) comprises at least one fitting flat surface (W1) for being fit to the receiving flat surface (Q1).

2. The robot (1) according to Claim 1, in which the controller (40) is configured to control the robot (1) to perform
- an approaching operation in which the fitting member (W) is made to approach the receiving section (Q), and
- a point contact operation in which a fitting straight line (W1a) of the fitting member (W) is brought into point contact with a receiving straight line (Q1a) of the receiving section (Q), wherein
the fitting straight line (W1a) is a straight line constituting an end of the fitting flat surface (W1) as seen in a width direction thereof, which is a direction orthogonal to the fitting direction (D), and
the receiving straight line (Q1a) is a straight line constituting an end of the receiving flat surface (Q1) as seen in a direction opposite to the fitting direction (D).

3. The robot (1) according to Claim 2, wherein the controller (40) is configured to control the robot (1) to perform a line contact operation in which the fitting flat surface (W1) of the fitting member (W) is brought into line contact with the receiving straight line (Q1a) of the receiving section (Q) while maintaining the point contact state between the fitting straight line (W1a) of the fitting member (W) and the receiving straight line (Q1a) of the receiving section (Q).

4. The robot (1) according to Claim 3, wherein the controller (40) is configured to control the robot (1) to perform a surface contact operation in which the fitting flat surface (W1) is brought into surface contact with the receiving flat surface (Q1) while maintaining the line contact state between the fitting flat surface (W1) and the receiving straight line (Q1a).

5. The robot (1) according to Claim 4, wherein the controller (40) is configured to control the robot (1) to perform a fitting operation in which the fitting member (W) is moved in the fitting direction (D) so as to fit to the receiving section (Q), while maintaining the state where the fitting flat surface (W1) is in surface contact with the receiving flat surface (Q1).

6. The robot (1) according to Claim 4, wherein the controller (40) is configured to control the robot (1) so that, when an abnormality is detected during the surface contact operation, the robot (1) performs at least one of a position control in which the fitting member (W) is moved in a direction orthogonal to the fitting flat surface (W1) or the receiving flat surface (Q1), and a force control in which a force in the direction orthogonal to the fitting flat surface (W1) or the receiving flat surface (Q1) is applied to the fitting member (W).

7. The robot (1) according to Claim 4, wherein the controller (40) is configured to control the robot (1) so that, when an abnormality is detected during the surface contact operation, the robot (1) performs at least one of a position control in which the fitting member (W) rotates about the receiving straight line (Q1a), and a force control in which a moment about the receiving straight line (Q1a) is applied to the fitting member (W).

8. The robot (1) according to Claim 2, wherein the controller (40) is configured to control the robot (1) so that, when an abnormality is detected during the point contact operation, the robot (1) performs at least one of a position control in which the fitting member (W) is moved in a direction orthogonal to the receiving straight line (Q1a) and parallel to the fitting flat surface (W1) or the receiving flat surface (Q1), and a force control in which a force in the direction orthogonal to the receiving straight line (Q1a) and parallel to the fitting flat surface (W1) or the receiving flat surface (Q1) is applied to the fitting member (W).

9. The robot (1) according to any one of Claims 1 to 8, further comprising:
a grip section (23) that grips the fitting member (W); and
an elastic member (24) that is interposed between the fitting member (W) and the grip section (23) at a contact spot of the fitting member (W) and the grip section (23).

10. A robot system comprising a robot (1) and a controller (40), wherein the controller(40) is configured to control the robot (1) so as to move a fitting member (W) in a fitting direction (D) so as to fit to a receiving section (Q),
wherein the receiving section (Q) comprises at least one receiving flat surface (Q1) running parallel to the fitting direction (D), and the fitting member (W) comprises at least one fitting flat surface (W1) for being fit to the receiving flat surface (Q1).

11. The robot system of claim 10, in which the robot (1) and the controller (40) are configured as in any one of claims 2 to 9.
